# FASCICULE DE BREVET EUROPEEN

(11) **EP 0 305 225 B1**
(45) Date de publication et mention de la délivrance du brevet: **01.12.1993**
(21) Numéro de dépôt: 88401591.8
(22) Date de dépôt: 23.06.1988
(51) Int. Cl.: C08L 95/00, E01C 7/26

(54) **Procédé de préparation d'un liant pour revêtement de chaussées à base de bitume et de poudre de caoutchouc de récupération ainsi que liant obtenu par la mise en oeuvre de ce procédé**
Verfahren zur Herstellung eines Strassenbelagbindemittels aus Bitumen und Altgummimehl und so erhaltenes Bindemittel
Process for producing a pavement binder based on bitumen and reclaimed rubber powder, and binder produced for carrying out this process

(30) Priorité: 27.08.1987 FR 8711982
(43) Date de publication de la demande: 01.03.1989
(73) Titulaire: BEUGNET, Société dite, F-75008 Paris (FR)
(72) Inventeur: Sainton, Alain, Abbeville La Riviere (Essonne) (FR)
(74) Mandataire: Cabinet HERRBURGER

(56) Documents cités:
- FR-A- 2 567 447
- FR-A- 2 580 658

## Description

La présente invention se rapporte à un liant pour revêtement de chaussée ou similaire à base de bitume et de poudre de caoutchouc.

De tels liants sont couramment utilisés, notamment pour réaliser des revêtements de sols, des couches d'étanchéité pour ouvrages d'art, des joints de chaussées, des produits de colmatage de fissures, etc...

On s'est aperçu, notamment conformément au brevet français n° 2 580 658 qu'il était possible d'améliorer les caractéristiques rhéologiques de ces liants et élargir ainsi leurs gammes d'utilisation en y ajoutant des huiles lourdes à caractère naphténo-aromatique ainsi que des élastomères synthétiques à insaturation oléfinique de poids moléculaire supérieur à 100 000 faisant office de catalyseurs de la réaction d'incorporation du caoutchouc dans le bitume.

Le procédé de fabrication classique de ces liants constitue à introduire ces différents constituants dans un malaxeur pour les mélanger intimement de façon à obtenir un mélange initial, puis, à porter ce mélange à une température de l'ordre de 200°C, et à maintenir cette température sous agitation pendant une durée d'environ 40 à 140 minutes.

Conformément à ce procédé, on utilise généralement un mélange initial contenant environ 80 % de bitume, 15 à 16 % de poudre de caoutchouc, 3 % d'huiles lourdes et 0,5 à 1,5 % de catalyseur.

On obtient ainsi en fin de réaction, des liants ayant une viscosité dynamique de l'ordre de 1,200 à 1,400 Pa.s à 200°C, un point de ramollissement bille et anneau (norme AFNOR NFT 66 008) de l'ordre de 65 à 80°C et une pénétrabilité à 25°C (norme AFNOR NFT 66 004) de l'ordre de 60 à 65 10⁻⁴m.

Ces liants se montrent satisfaisants dans la pratique mais, doivent obligatoirement être utilisés au plus tard dans les six heures qui suivent leur fabrication, étant donné que l'on a pu constater que, au delà, leurs propriétés se dégradent de manière relativement rapide.

Si l'on considère, à titre d'exemple, les variations en fonction du temps de la viscosité à 200°C d'un liant classique du type susmentionné, telle que représentée sur le schéma en annexe I, on peut se rendre compte que celle-ci présente, en début de réaction une augmentation constante suivie d'un pic, puis, au bout d'environ deux heures, un palier où elle reste constante pendant environ deux à quatre heures à une valeur voisine de 1,200 Pa.s.

Ensuite, la viscosité baisse de façon plus ou moins régulière, cette chute s'accompagnant d'une chute de la température du point de ramollissement, et, de manière générale de toutes les qualités du liant.

L'impossibilité ainsi mise en évidence de pouvoir stocker les liants classiques pendant plus de quelques heures, constitue, en fait, une contrainte énorme au niveau des chantiers, étant donné qu'elle exige le déplacement sur ceux-ci d'une unité complète de fabrication du liant, donc, d'un matériel lourd et volumineux dont le transport ne peut être que très onéreux.

Il est donc clair que, pour des raisons de coût, un tel déplacement de matériel ne peut être envisagé que pour des chantiers d'une certaine importance, devant utiliser des quantités importantes de liant.

Il résulte de ce qui précède, que, malgré leurs qualités propres, il n'est pas possible d'utiliser des liants classiques du type susmentionné, sur de petits chantiers, notamment des chantiers à caractère régional.

Indépendamment de ce qui précède, on connaît déjà conformément au document FR-A-2 567 447, un procédé permettant essentiellement de régénérer les liants au bitume caoutchouc dégradés par lequel il est proposé de stocker un mélange bitume/caoutchouc à une température de l'ordre de 150°C, dans tous les cas inférieure à 160°C, c'est-à-dire inférieure à la limite de l'amorce des réactions chimiques entre les bitumes et le caoutchouc.

La présente invention a pour objet de remédier aux inconvénients des liants au bitume caoutchouc en proposant un liant nouveau qui possède des qualités similaires à celles des liants classiques bien qu'ayant une composition sensiblement modifiée et qui parallèlement, présente l'avantage de pouvoir être stocké quelques jours, sans intervention, tout en gardant des propriétés bien définies et stables permettant ainsi de centraliser dans une certaine mesure la fabrication du liant puis de la disperser ensuite au fur et à mesure des besoins des différents chantiers.

Pour qu'un tel liant puisse donner satisfaction quant aux résultats obtenus tout en étant rentable, il est indispensable que la température de stockage du liant après sa fabrication soit relativement basse, (en principe égale au maximum à 160°C) et que la viscosité du mélange soit suffisamment peu élevée à cette température pour que celui-ci puisse être pompé, ce qui signifie que la viscosité ne doit pas excéder 1,000 Pa.s.

Or, conformément à l'invention, on s'est aperçu que, de manière surprenante, il était possible de résoudre le problème posé en mettant en oeuvre un liant à base de bitume et de poudre de caoutchouc de récupération pour revêtement de chaussée ou similaire, liant comportant, en tant qu'additif, une huile lourde à caractère naphténo-aromatique ainsi qu'un élastomère synthétique à insaturation oléfinique de poids moléculaire supérieur à 100 000 faisant office de catalyseur de la réaction d'incorporation du caoutchouc dans le bitume.

Selon l'invention, ce liant est caractérisé en ce qu il comporte 8 à 10 % en poids de poudre de caoutchouc, 4 à 6 % en poids d'huile lourde à caractère naphténo-aromatique et 2 à 3 % en poids de catalyseur, le complément à 100 % étant constitué par du bitume, et en ce qu'il est obtenu par la mise en oeuvre d'un procédé par lequel on mélange intimement les différents constituants du liant de façon à obtenir un mélange initial, puis on porte ce mélange à une température comprise entre 175 et 185°C, on maintient cette température sous agitation pendant 2 heures en obtenant une viscosité finale de 0,600 à 0,650 Pa.s puis on abaisse la température du mélange à une valeur n'excédant pas 160° en obtenant une viscosité n'excédant pas 1,000 Pa.s et on stocke le liant ainsi obtenu en étuve à cette température dans un récipient hermétiquement clos et sans agitation pendant une durée pouvant aller jusqu'à 10 jours en obtenant en fin de stockage une viscosité n'excédant pas 1,000 Pa.s avant de le pomper et de le chauffer à nouveau à une température comprise entre 175 et 185°C en vue de son utilisation finale.

Le liant conforme à l'invention permet donc de remplacer la courbe donnant les variations de la viscosité d'un liant bitume caoutchouc classique à 200°C en fonction du temps représentée sur la figure 1, par une courbe voisine de la courbe théorique représentée sur la figure 2 qui correspond aux variations de la viscosité à 180 et 160°C en fonction du temps d'un liant obtenu par le procédé conforme à l'invention, telle qu'elle est recherchée.

La partie gauche de cette courbe, correspondant à un temps compris entre 0 et deux heures, représente la phase de fabrication qui est effectuée à une température de 180°C ; à cette température la viscosité croît jusqu'à se stabiliser à une valeur voisine de 0,600 Pa.s. La courbe, située entre les deux verticales en pointillés, correspond à la phase de refroidissement de 180 à 160°C ; il s'agit là d'un refroidissement rapide mais non d'une trempe, à l'issue duquel la viscosité se stabilise aux alentours de 1,000 Pa.s, valeur qu'elle peut conserver pendant une période d'environ dix jours, cette viscosité est susceptible d'être à tout moment abaissée au voisinage de 0,600 Pa.s en chauffant le produit à 180°C, ce qui correspond à sa température d'utilisation, comme indiqué en pointillés sur la figure.

Selon une caractéristique préférentielle de l'invention, la poudre de caoutchouc comprend pour 100 parties pondérales 20 à 80 parties de déchets broyés de pneumatiques de poids lourds et 80 à 20 parties de déchets broyés de pneumatiques de véhicules de tourisme et/ou de cyclomoteurs.

Pour que le produit défini ci-dessus soit apte à donner un maximum de satisfaction, il est nécessaire de modifier quelque peu les proportions des différents constituants du mélange initial, par rapport à celles du mélange classique susmentionné.

La diminution de la proportion de poudre par rapport au mélange classique est dictée par la nécessité susmentionnée de diminuer la viscosité du liant ; il est, en effet, bien connu qu'une diminution de la quantité de poudre de caoutchouc, entraîne automatiquement une diminution de la viscosité.

Cette caractéristique est mise en lumière par les courbes représentées sur la figure 3 qui montrent l'effet de la concentration en poudre de caoutchouc du mélange initial sur les variations en fonction du temps de la viscosité du liant obtenu conformément à l'invention à une température de 180°C et dans le cas de mélanges initiaux contenant 5 % d'huile lourde, 2 % de catalyseur et respectivement 8, 9 et 10 % de poudre de caoutchouc.

Il est clair, d'après ces courbes que, dans le cas d'un mélange à 10 % de poudre, la viscosité se stabilise à une valeur voisine de 1,000 Pa.s c'est-à-dire de la limite recherchée, tandis que, pour des mélanges contenant 8 et 9 % de poudre, les valeurs correspondantes sont respectivement de 0,550 et 0,850 Pa.s.

Il est par ailleurs intéressant de remarquer que les courbes de viscosité sont plus planes au fur et à mesure que le pourcentage de poudre de caoutchouc croît : on peut observer sur la courbe correspondant à un mélange contenant 10 % de poudre, une période de 7 heures pendant laquelle la viscosité ne varie pratiquement pas.

Dans le cas de l'exemple considéré sur les courbes représentée sur la figure 3, la pénétrabilité du liant est passée de 84 10⁻⁴ mètres pour le mélange à 8 % de podure de caoutchouc à 77 pour le mélange à 9 % et 72 pour le mélange à 10 % de poudre de caoutchouc ; or, l'expérience montre que la valeur optimale de la pénétrabilité se situe aux environs de 60 à 70 10⁻⁴ m.

Cette constatation tend à guider le choix des utilisateurs du liant conforme à l'invention vers des mélanges initiaux contenant aux environs de 10 % de poudre de caoutchouc, d'autant plus qu'il a été également constaté que la résilience s'améliore légèrement avec l'augmentation de la quantité de poudre.

Par ailleurs, et de manière classique, conformément à l'invention, on met en oeuvre de préférence une poudre contenant à la fois des déchets broyés de pneumatiques de poids lourds et des déchets broyés de pneumatiques de voitures de tourisme et/ou de cyclomoteurs ; on peut ainsi allier les qualités essentielles du caoutchouc naturel (résistance à la rupture, bonne adhérence en mélange avec les bitumes) à celles du caoutchouc synthétique (tenue remarquable à basse température) : il est, en effet, bien connu que les pneumatiques de poids lourds renferment essentiellement du caoutchouc naturel constitué principalement de poly-isoprène alors que les pneumatiques de véhicules légers renferment surtout du caoutchouc synthétique de type poly-butadiène.

Parmi les huiles lourdes à caractère naphténo-aromatique susceptibles d'être utilisées avec satisfaction, conformément à l'invention, on peut citer à titre d'exemple, l'huile commercialisée par la firme ESSO sous la dénomination "FLEXON 110" (marque déposée) ou l'un quelconque des produits équivalents disponibles dans le commerce.

Il a été prouvé que l'augmentation du pourcentage d'huile lourde dans le mélange initial fait baisser la viscosité de façon presque régulière, et que l'on peut obtenir une baisse de la viscosité de 50 à 100 10⁻³ Pa.s pour une variation de la proportion d'huile lourde voisine de 1 % ; les courbes représentées sur la figure 4 permettent de vérifier cet effet dans le cas d'un liant fabriqué conformément à l'invention, à une température de 180°C, à partir d'un mélange initial contenant 8 % de poudre de caoutchouc, 2 % de catalyseur et, respectivement, 3, 4 et 5 % d'huile lourde.

Conformément à l'invention, on a donc intérêt à choisir une concentration en huile lourde supérieure à la concentration généralement utilisée dans les liants classiques. Cependant, l'expérience a montré qu'il était toujours préférable de maintenir cette concentration à une valeur maximale de 6 % étant donné que, parallèlement à l'abaissement de la viscosité, l'augmentation de la concentration en huile lourde peut être nuisible aux qualités dynamiques du liant obtenu, étant donné qu'elle accroît la pénétrabilité et fait chuter la résilience.

Par ailleurs, conformément à l'invention, le catalyseur peut être choisi de façon classique parmi les polymères ou copolymères à insaturation éthylénique déjà préconisés depuis longtemps pour l'incorporation aux bitumes vulcanisés au soufre destinés aux enrobés routiers ou produits analogues.

Par exemple, on peut citer à titre non limitatif, des poly-isoprènes, poly-chloroprènes, poly-butadiènes, des polymères éthylène propylène, éthylène acétate de vinyl, butadiène styrène, des terpolymères éthylène propylène - autres diènes copolymérisables, styrène butadiène styrène, styrène isoprène styrène etc...

On a, en effet, pu constater que l'augmentation de la proportion de catalyseur avait un effet bénéfique sur la viscosité du liant.

Selon une autre caractéristique de l'invention, l'on met en oeuvre en tant que mélange environ 10 % en poids de poudre de caoutchouc, 6 % en poids d'huile lourde à caractère naphténo-aromatique et 2,5 % en poids de catalyseur, le complément à 100 % étant constitué par un bitume routier pur.

Cette proportion dans le mélange initial s'est, en effet, avérée comme donnant les résultats optimaux.

La courbe I représentée sur la figure 5 montre l'évolution, dans le temps, du point de ramollissement bille et anneau au stockage et à 160°C d'un liant conforme à l'invention ayant la composition susmentionnée.

Après une faible variation au départ, on peut noter un palier pendant au moins 6 jours, ce qui satisfait au but recherché.

Cet avantage devient particulièrement clair si l'on compare cette courbe à la courbe II qui correspond à l'évolution dans le temps du point de ramollissement bille et anneau d'un liant classique qui ne peut être conservé au maximum que pendant quelques heures.

En effet, étant donné sa viscosité, un tel liant ne peut pas être stocké à une température inférieure à 200°C car sinon il serait impossible de le manipuler avec les moyens de pompage couramment employés sur les chantiers.

## Revendications

1. Liant à base de bitume et de poudre de caoutchouc de récupération pour revêtement de chaussée ou similaire, liant comportant, en tant qu'additif, une huile lourde à caractère naphténo-aromatique ainsi qu'un élastomère synthétique à insaturation oléfinique de poids moléculaire supérieur à 100 000 faisant office de catalyseur de la réaction d'incorporation du caoutchouc dans le bitume, liant caractérisé en ce qu'il comporte 8 à 10 % en poids de poudre de caoutchouc, 4 à 6 % en poids d'huile lourde à caractère naphténo-aromatique et 2 à 3 % en poids de catalyseur, le complément à 100 % étant constitué par du bitume, et en ce qu'il est obtenu par la mise en oeuvre d'un procédé par lequel on mélange intimement les différents constituants du liant de façon à obtenir un mélange initial, puis on porte ce mélange à une température comprise entre 175 et 185°C, on maintient cette température sous agitation pendant 2 heures en obtenant une viscosité finale de 0,600 à 0,650 Pa.s puis on abaisse la température du mélange à une valeur n'excédant pas 160° en obtenant une viscosité n'excédant pas 1.000 Pa.s et on stocke le liant ainsi obtenu en étuve à cette température dans un récipient hermétiquement clos et sans agitation pendant une durée pouvant aller jusqu'à 10 jours en obtenant en fin de stockage une viscosité n'excédant pas 1,000 Pa.s avant de le pomper et de le chauffer à nouveau à une température comprise entre 175 et 185°C en vue de son utilisation finale.

2. Liant selon la revendication 1, caractérisé en ce que la poudre de caoutchouc comprend pour 100 parties pondérales 20 à 80 parties de déchets broyés de pneumatiques de poids lourds et 80 à 20 parties de déchets broyés de pneumatiques de véhicules de tourisme et/ou de cyclomoteurs.

3. Liant selon l'une quelconque des revendications 1 et 2, caractérisé en ce que l'on met en oeuvre en tant que mélange 10 % en poids de poudre de caoutchouc, 6 % en poids d'huile lourde à caractère naphténo-aromatique et 2,5 % en poids de catalyseur, le complément à 100 % étant constitué par du bitume.

## Claims

1. A binder based on bitumen and reclaimed rubber powder for road surfacing or the like, the binder containing, as an additive, a heavy oil of naphtheno-aromatic nature, and also a synthetic elastomer with olefinic unsaturation and a molecular weight of more than 100,000 serving as a catalyst for the reaction of incorporating the rubber into the bitumen, said binder being characterised in that it comprises 8 to 10 % by weight of rubber powder, 4 to 6 % by weight of heavy oil of naphtheno-aromatic nature and 2 to 3 % by weight of catalyst, the balance to 100 % being made up by bitumen, and in that it is obtained by using a process in which the different constituents of the binder are intimately mixed so as to obtain an initial mixture, then this mixture is brought to a temperature of between 175 and 185°C, said temperature being maintained for two hours while the mixture is being stirred so as to obtain an end viscosity of 0.600 to 0.650 Pa.s, then the temperature of the mixture is lowered to a value not exceeding 160° thus obtaining a viscosity not exceeding 1.000 Pa.s, and the binder thus obtained is stored in an oven at this temperature in a hermetically sealed container without stirring for a period which can last up to 10 days, thus obtaining at the end of storage a viscosity not exceeding 1.000 Pa.s before it is discharged and reheated to a temperature of between 175 and 185°C with a view to its final utilisation.

2. A binder according to claim 1, characterised in that the rubber powder comprises, per 100 parts by weight, 20 to 80 parts of ground lorry tyre waste and 80 to 20 parts of ground waste of tyres from private vehicles and/or mopeds.

3. A binder according to either claim 1 or claim 2, characterised in that the mixture used comprises 10 % by weight of rubber powder, 6 % by weight of heavy oil of naphtheno-aromatic nature and 2.5 % by weight of catalyst, the balance to 100 % being made up by bitumen.

## Patentansprüche

1. Bindemittel auf Bitumen- und Altgummimehlbasis für Straßenbaläge oder dergleichen, das als Additive ein Schweröl mit naphteno-aromatischem Charakter sowie ein als Katalysator für die Reaktion des Einbindens des Gummis in den Bitumen dienendes synthetisches Elastomer mit ungesättigten Olefinen mit Molekulargewichten über 100 000 enthält,
**dadurch gekennzeichnet**,
daß es 8 bis 10 Gewichtsprozent Kautschukmehl, 4 bis 6 Gewichtsprozent Schweröl mit naphteno-aromatischem Charakter und 2 bis 3 Gewichtsprozent Katalysator enthält, wobei der Rest auf 100 Gewichtsprozent aus Bitumen besteht, und daß es durch Anwendung eines Verfahrens erhalten wird, bei dem die verschiedenen Inhaltsstoffe des Bindemittels innig miteinander vermischt werden, um eine Ausgangsmischung zu erhalten, dann diese Mischung auf eine Temperatur im Bereich zwischen 175 und 185°C gebracht wird, diese Temperatur unter Rühren für zwei Stunden aufrechterhalten wird, wobei man eine Endviskosität zwischen 0,600 und 0,650 Pa's erhält, dann die Temperatur der Mischung auf einen Wert abgesenkt wird, der 160°C nicht überschreitet, wobei man eine Viskosität erhält, die 1,000 Pa's nicht überschreitet, und das im Ofen so erhaltene Bindemittel bei dieser Temperatur in einem hermetisch dichten Behälter und ohne Rühren für eine Dauer von bis zu 10 Stunden gelagert wird, wobei man am Ende des Lagerns eine Viskosität erhält, die 1,000 Pa's nicht überschreitet, bevor die Mischung gepumpt und erneut auf eine Temperatur im Bereich zwischen 175 und 185°C aufgeheizt wird im Hinblick auf ihre schließlichen Verwendung.

2. Bindemittel nach Anspruch 1,
**dadurch gekennzeichnet**,
daß das Kautschukmehl für 100 Gewichtsteile 20 bis 80 Teile zermahlenen Abfall aus Reifen von Schwerlastfahrzeugen und 80 bis 20 Teile zermahlenen Abfall aus Reifen von Personenwagen und/oder von Motorrädern enthält.

3. Bindemittel nach irgendeinem der Ansprüche 1 oder 2,
**dadurch gekennzeichnet**,
daß es erzeugt wird als Mischung aus 10 Gewichtsprozent Kautschukmehl, 6 Gewichtsprozent Schweröl mit naphteno-aromatischem Charakter und 2,5 Gewichtsprozent Katalysator, wobei der Rest auf 100 Prozent aus Bitumen besteht.
